Europäisches Patentamt

European Patent Office

Office européen des brevets

(19)

(11) Veröffentlichungsnummer: **0 010 635**
**B1**

(12) **EUROPÄISCHE PATENTSCHRIFT**

(45) Veröffentlichungstag der Patentschrift:
29.04.81

(21) Anmeldenummer: 79103777.3

(22) Anmeldetag: 03.10.79

(51) Int. Cl.³: **B 27 K 3/40**

(54) **Verwendung von N,N-Dimethyl-N'-p-tolyl-N'-dichlorfluormethylthiosulfamid zur Bekämpfung von holzschädigenden Pilzen.**

(30) Priorität: 13.10.78 DE 2844605

(43) Veröffentlichungstag der Anmeldung:
14.05.80 Patentblatt 80/10

(45) Bekanntmachung des Hinweises auf die Patenterteilung:
29.04.81 Patentblatt 81/17

(84) Benannte Vertragsstaaten:
AT BE CH DE FR GB IT LU NL SE

(56) Entgegenhaltungen:
**DE-A-2 711 639**
**DE-B-1 238 139**
**R. WEGLER: »Chemie der Pflanzenschutz- und Schädlingsbekämpfungsmittel«,
Band 4, 1977, Springer Verlag, Heidelberg, DF,
»Fungizide, Holzschutz« *Seiten 193, 194, 269***

(73) Patentinhaber: **BAYER AG, Zentralbereich Patente, Marken und Lizenzen, D-5090 Leverkusen 1, Bayerwerk (DE)**

(72) Erfinder: **Kühle, Engelbert, Dr., von Bodelschwingh-Strasse 42, D-5060 Bergisch Gladbach (DE)**
Erfinder: **Paulus, Wilfried, Dr., Deswatinesstrasse 90, D-4150 Krefeld (DE)**
Erfinder: **Klauke, Erich, Dr., Eichendorff-Weg 8, D-5068 Odenthal (DE)**
Erfinder: **Genth, Hermann, Dr., Am Heckerhof 60, D-4150 Krefeld (DE)**

# 0 010 635

### Verwendung von N,N-Dimethyl-N'-p-tolyl-N'-dichlorfluormethylthiosulfamid zur Bekämpfung von holzschädigenden Pilzen

Die Erfindung betrifft die Verwendung von N,N-Dimethyl-N'-p-tolyl-N'-dichlorfluormethylthio-sulfamid zur Bekämpfung von holzschädigenden Pilzen.

Aus der DE-PS 1 238 139 sind Sulfamide wie das N,N-Dimethyl-N'-tolyl-N'-dichlorfluormethylthio-sulfamid als Mittel gegen Schimmel- und Bakterienbefall von Anstrichen und Kunststoffüberzügen bekannt. Die mikrobiziden Mittel werden in die Anstrichstoffe oder in den Kunststoff eingearbeitet.

Bei der mikrobiziden Ausrüstung von Holz ist es im allgemeinen nicht möglich, einen festen Wirkstoff in das Holz einzuarbeiten. Es ist daher allgemein üblich, den Wirkstoff mit einem Lösungsmittel zu formulieren, und auf das Holz aufzubringen (Chemie der Pflanzenschutz- und Schädlingsbekämpfungsmittel, Bd. 4, S. 257—72, Springer Verlag 1977).

Die Wirkung von N,N-Dimethyl-N'-phenyl-N'-(fluordichlormethylthio)-sulfamid gegen holzschädigende Pilze wird in »Holz als Roh- und Werkstoff 35 (1977) 233—237« beschrieben. N,N-Dimethyl-N'-phenyl-N' (fluordichlormethylthio)-sulfamid löst sich jedoch in den für Holzschutzmittel üblichen Formulierungsmitteln sehr schlecht, so daß große Formulierungsmittelmengen erforderlich sind, um die erforderliche Menge an Wirkstoff auf und/oder in das Holz zu bringen.

Es wurde die Verwendung von N,N-Dimethyl-N'-p-tolyl-N'-dichlorfluormethylthio-sulfamid in Holzimprägnierungsmitteln gefunden.

N,N-Dimethyl-N'-p-tolyl-N'-dichlorfluormethylthiosulfamid ist ein neuer Wirkstoff zur Bekämpfung holzschädigender Pilze, der überraschenderweise in organischen Lösungsmitteln sehr gut löslich ist, so daß seine Verwendung als Wirkstoff in Holzimprägniermitteln ohne Schwierigkeit und mit Vorteilen möglich ist.

Als Lösungsmittel für den erfindungsgemäßen Wirkstoff seien die in Holzimprägniermitteln üblicherweise verwendeten Lösungsmittel genannt (Ullmann, Bd. 8, S. 553, 1957).

Beispielsweise seien genannt: Erdöl- und Benzinfraktionen, wie Testbenzin, ferner Lösungsvermittler, wie Äthylacetat und Xylol. Bevorzugt seien Gemische aromatischer Kohlenwasserstoffe (Kp 150 bis 180°C) und Benzinfraktionen (Kp 140 bis 200°C) genannt.

Der erfindungsgemäße Wirkstoff wird im allgemeinen in Mengen von 0,35 bis 3,5%, bevorzugt von 1,5 bis 3%, in dem Lösungsmittel gelöst.

Die unerwartet gute Löslichkeit des erfindungsgemäßen Wirkstoffes den für Holzimprägniermittel üblichen Lösungsmitteln hat zur Folge, daß das erforderliche Anwendungsvolumen gering ist. Dadurch fällt die geringe Toxizität des erfindungsgemäßen Wirkstoffes besonders ins Gewicht. Im Gegensatz zu bekannten Wirkstoffen, die zur Bekämpfung holzschädigender Pilze verwendet oder vorgeschlagen werden, z. B. Pentachlorphenol, wirkt der erfindungsgemäße Wirkstoff weder kumulierend noch percutan toxisch.

Die Herstellung von N,N-Dimethyl-N'-p-tolyl-N'-dichlorfluormethylthio-sulfamid ist bekannt (FR 1 310 083) und kann beispielsweise durch Umsetzung von N,N-Dimethyl-N'-p-tolyl-sulfamid mit Fluordichlormethansulfonylchlorid erfolgen.

N,N-Dimethyl-N'-p-tolyl-N'-dichlorfluormethylthiosulfamid ist wirksam gegen holzschädigende Pilze wie Ceratocystis picease, Ceratocystis pini, Ceratocystis coerulenceus, Chaetomium globosum, Coniophora cerebella, Coriolus versicolor, Lentinus tigrinus und Poria vaporaria.

Die Formulierung des erfindungsgemäßen Wirkstoffes erfolgt in üblicher Weise, beispielsweise durch Einrühren des Wirkstoffes in das Formulierungsmittel.

Selbstverständlich ist es möglich, den erfindungsgemäßen Wirkstoff mit anderen Wirkstoffen zu kombinieren. Bevorzugt sind Kombinationen mit Benzimidazolylmethylcarbamaten, Thiazolylbenzimidazol Zinkdimethyldithiocarbamat, Tetramethylthiuramdisulfid, N-Nitrosocyclohexyl-hydroxylamin, N-Cyclohexyl-N-methoxy-2,5-dimethyl-3-furamid.

### Beispiel 1

### Bestimmung der minimalen Hemm-Konzentration (MHK)

Ein Agar, der aus Bierwürze und Pepton hergestellt wird, wird mit dem erfindungsgemäßen Wirkstoff in Konzentrationen von 2 mg/l bis 5000 mg/l versetzt. Nach Erstarren des Agars erfolgt die Kontamination mit Reinkulturen der in Tabelle 1 aufgeführten Testorganismen. Nach 2wöchiger Lagerung bei 28°C und 60—70% rel. Luftfeuchtigkeit wird die MHK bestimmt. MHK ist die niedrigste Konzentration an Wirkstoff, bei der keinerlei Bewuchs durch die verwendete Mikrobenart erfolgt, sie ist in nachstehender Tabelle 1 angegeben:

0 010 635

Tabelle 1

Angabe der MHK-Werte in mg/l bei der Einwirkung des unten angegebenen Wirkstoffs auf Pilze:

| Testorganismen | N,N-Dimethyl-N'-p-tolyl-N'-dichlorfluormethylthiosulfamid |
|---|---|
| Ceratocystis pini | 20 |
| Ceratocystis coerulenceus | 20 |
| Coniophora cerebella | 10 |
| Chaetomium globosum | 10 |
| Lentinus tigrinus | 5 |
| Poria Vaporaria | 2 |

## Beispiel 2

Löslichkeiten in Gew.-% von N,N-Dimethyl-N'-p-tolyl-N'-dichlorfiuormethylthio-sulfamid (A) im Vergleich zu N,N-Dimethyl-N'-phenyl-N'-dichlorfluormethylthiosulfamid (B) und N-Dichlorfluormethylthio-phthalimid (C).

Tabelle 2

Löslichkeiten in Gew.-%

| Lösungsmittel | Wirkstoff | | |
|---|---|---|---|
| | A | B | C |
| Äthylacetat | 33 | 11 | 8 |
| Methanol | 5 | 1,5 | 1,2 |
| Gemisch aromatischer Kohlenwasserstoffe, Kp. 159—175° C | 20 | 7,5 | 4,2 |
| Benzinfraktion, Kp. 140—190° C | 2,5 | 1,2 | 0,3 |
| Xylol | 29 | 6,5 | 3,6 |

## Beispiel 3

### Toxikologische Untersuchungen mit N,N-Dimethyl-N'-p-tolyl-N'-dichlorfluormethylthio-sulfamid

N,N-Dimethyl-N'-p-tolyl-N'-dichlorfluormethylthio-sulfamid gelöst in Aceton hat nach einmaliger Verabreichung mittels Schlundsonde an männlichen Ratten eine $LD_{50}$ per os > 2500 mg/kg Körpergewicht. Die Berechnung der $LD_{50}$ erfolgte mittels Probitanalyse (Fink et al, Methods of information in medicin 5, 19, 1966).

Vergleichssubstanz:

Pentachlorphenol; $LD_{50}$ per os 160 mg/kg Körpergewicht Ratten (Caines, Toxycology and Applied Pharmacology 14, 515 (1969)).

3

Die kutane Behandlung von männlichen Ratten mit N,N-Dimethyl-N'-p-tolyl-N'-dichlorfluormethyl-thio-sulfamid zeigte, daß N,N-Dimethyl-N'-p-tolyl-N'-dichlorfluormethylthio-sulfamid percutan ebensowenig toxisch ist wie das bekannte N,N-Dimethyl-N'-phenyl-N'-dichlorfluormethylthio-sulfamid; die $LD_{50}$ kutan ist > 500 mg/kg. Hingegen wirkt Pentachlorphenol perutan toxisch; $LD_{50}$ kutan 325 mg/kg.

## Patentansprüche

1. Verwendung von N,N-Dimethyl-N'-p-tolyl-N'-dichlorfluormethylthio-sulfamid in Holzimprägniermitteln.

2. Verwendung gemäß Anspruch 1, zur Bekämpfung von Basidiomyceten.

3. Verwendung gemäß Anspruch 1, gekennzeichnet durch eine Zugabe von 0,35 bis 3,5% Gew.-Teile des N,N-Dimethyl-N'-p-tolyl-N-dichlorfluormethylthio-sulfamids zu Holzimprägniermitteln.

## Claims

1. Use of N,N-dimethyl-N'-p-tolyl-N'-dichlorofluoromethylthio-sulphamide in wood impregnating agents.

2. Use according to Claim 1, for combating Basidiomycetes.

3. Use according to Claim 1, characterised in that 0.35 to 3.5% parts by weight of N,N-dimethyl-N'-p-tolyl-N-dichlorofluormethylthio-sulphamide are added to wood impregnating agents.

## Revendications

1. Utilisation de la N,N-diméthyl-N'-p-tolyl-N'-dichlorofluorométhylthiosulfamide dans des agents d'imprégnation du bois.

2. Utilisation selon la revendication 1 pour combattre les Basidiomycètes.

3. Utilisation pour agents d'imprégnation du bois selon la revendication 1, caractérisée par une addition de 0,35 à 3,5%, en parties en poids, de N,N-diméthyl-N'-p-tolyl-N'-dichlorofluorométhylthio-sulfamide.